# EUROPEAN PATENT SPECIFICATION

(11) **EP 4 551 470 B1**
(45) Date of publication and mention of the grant of the patent: **09.12.2026**
(21) Application number: 23748570.1
(22) Date of filing: 06.07.2023
(51) Int. Cl.: H01M 50/249, H01M 50/233, H01M 50/231, H01M 50/222, C04B 35/117, C04B 35/14, C04B 35/18, C04B 35/80, C04B 41/85, C04B 41/50, C04B 41/00

(54) **ENCLOSURE**
GEHÄUSE
ENCEINTE

(30) Priority: 06.07.2022 GB 202209947
(43) Date of publication of application: 14.05.2025
(73) Proprietor: Darchem Engineering Limited, Stockton-on-Tees, Cleveland TS21 1LB (GB)
(72) Inventor: MAYNARD, Jack, Stockton-on-Tees Cleveland TS21 1LB (GB)
(74) Representative: Withers & Rogers
(86) International application number: PCT/GB2023/051789
(87) International publication number: WO 2024/009105

(56) References cited:
- EP-A1- 3 651 234
- US-A- 5 380 475
- US-A1- 2006 210 457
- US-A1- 2010 266 788
- US-A1- 2017 214 103
- US-A1- 2019 092 697
- US-A1- 2021 070 664

## Description

### FIELD

The present disclosure relates to an enclosure for housing an electrochemical power unit wherein at least a region of the enclosure is formed of a material. The present disclosure also relates to said material, a method of manufacturing said material, and a structure comprising said material. The enclosure disclosed herein may be thought of as a "structural insulation system".

### BACKGROUND

In many industries, batteries and other electrochemical power units are used to provide power, for example on vehicles. Such applications require the battery to be contained in an enclosure to provide protection in the event of a battery fire or other explosive event. Further, such enclosures provide protection to the battery, for example in the event of a vehicle crash. This is of particular interest in the aerospace industry where the battery is located on an aircraft.

In the aerospace industry, such enclosures are typically made of metal, and are consequently heavy. Some known enclosure designs for eVTOL (electric vertical take-off and landing) aircraft involve the use of organic composites. However, these have been found to be either penetrated and fail in the event of a thermal event, or are so thick they are too heavy to be practicable.

It is an object of the present disclosure to overcome or substantially reduce the problems associated with known enclosures.

### SUMMARY

An enclosure defining an internal volume for housing an electrochemical power unit is provided, wherein the enclosure is formed of a material comprising a ceramic matrix composite (CMC).

In exemplary embodiments, the CMC is part of a first component of the material.

In exemplary embodiments, the first component is formed from CMC. For example, the first component is fabricated or manufactured from CMC in exemplary embodiments.

In exemplary embodiments, the first component is located proximal the internal volume. In exemplary embodiments, the first component is arranged so as to define an internal surface of the enclosure.

In exemplary embodiments, the CMC is positioned such that it is exposed to the extremely high temperatures of a thermal event, and acts to lower these temperatures to more manageable temperatures for insulating the components distal the CMC (with respect to the internal volume) and components outside the enclosure. In this way the enclosure is arranged to act as a fire shield.

Put another way, the CMC is positioned so as to insulate between an innermost portion of the first component, with respect to the internal volume, and an outermost portion of the first component, with respect to the internal volume.

The CMC is coated with a ceramic coating, the ceramic coating being provided proximal the internal volume.

In this way, the first component is formed from CMC with a ceramic coating applied thereon.

The CMC and ceramic coating together form a high integrity structural insulation that withstands the pressures of a thermal event, such as a battery explosion or fire, and deflects high velocity shrapnel or ejecta like molten metal.

As used herein, the term "thermal event" may include, but is not limited to, overcharging, over-discharging, short circuiting (either internal or external to the enclosure), or any event that could lead to cell thermal runaway which in turn may lead to full pack propagation. Full pack propagation is when thermal runaway of a cell causes thermal runaway in other cells, propagating throughout the pack (i.e. battery pack). Once complete, this can be referred to as full pack propagation.

The ceramic coating is supported by the CMC and acts to protect the ceramic coating and CMC from high temperature oxidative degradation, in the event of a thermal event. Furthermore, the CMC and ceramic coating are resistant to the hot corrosive gases that can be generated in a thermal event.

The use of the CMC and ceramic coating provides a strong yet light weight enclosure, for example that is strong enough to handle high G loadings from in air manoeuvres or crash landings when the enclosure is used on an aircraft. Furthermore, the lightweight properties of the enclosure make it particularly suitable to electric aircraft applications.

Accordingly, due at least in part to the use of the CMC and ceramic coating an effective enclosure is provided which provides thermal and structure protection to an exterior of the enclosure, e.g. in the event of a battery fire.

The ceramic coating withstands high temperatures, thereby protecting the CMC. The ceramic coating has advantageous dielectric properties which act to electrically isolate the interior of the enclosure from the remainder of the enclosure components, which may comprise potentially conductive elements. Furthermore, the ceramic coating is chemically inert, which is advantageous for the longevity of the in the service life of the enclosure and is beneficial against hot ejected electrolyte vapour. Additionally, the ceramic coating has good wear resistance and provides protection to the CMC layer against debris (e.g. cell ejecta) and mechanical damage.

The enclosure is arranged to prevent or inhibit the expulsion of flames and/or debris from the enclosure, thereby protecting other components of the aircraft and personnel/occupants of the aircraft.

Furthermore, the enclosure disclosed herein acts to protect its contents from environmental conditions in service, such as salt and spray and other emergency conditions.

In exemplary embodiment, the enclosure defines an internal surface comprising a plurality of walls, and wherein each wall has a first component that is formed of a CMC. The first component of each wall is formed from a CMC that is coated with a ceramic coating. In exemplary embodiments, the ceramic coating is provided over an inward facing surface of the CMC such that the ceramic coating faces inwards relative to the internal volume.

In this way, the entire internal surface of the enclosure is defined by a CMC, optionally with the ceramic coating provided on an inward facing surface of the CMC.

In the event of a thermal event occurring, the enclosure is configured to provide containment of the event. In some embodiments, the enclosure is configured to contain high pressures, e.g. from an internal explosion and/or from ignition of flammable electrolyte vapours. In some embodiments, the enclosure inhibits or prevents escape of any high-pressure conductive gases by safely venting these, containing any flames or high velocity shrapnel and ejecta, in doing so preventing spread of a fire. This is particularly important in the case of aerospace applications since this allows time for the aircraft to land safely.

In some embodiments, the enclosure comprises a vent which is configured to release gas from within the enclosure when pressure inside the enclosure reaches a predetermined level. For example, the vent may comprise a burst disc which is configured to rupture when pressure inside the enclosure reaches a predetermined amount, e.g. 1.5 bar.

In some embodiments, an exhaust is provided such that, when the vent is open (i.e. when the pressure inside the enclosure reaches a predetermined level), the interior of the enclosure is in fluid communication with the exhaust. In this way, any high-pressure conductive gases are safely vented from the enclosure e.g. to an area outside an aircraft. Furthermore, in some embodiments the container is configured to be fireproof or fire resistant.

In some non-claimed embodiments, the ceramic coating may be applied to the CMC in some locations and not in others. For example, the ceramic coating may be applied to the CMC in locations where there is a risk of intense heat and/or debris. In some embodiments, the ceramic coating may be applied to the CMC in predetermined arrays, e.g. repeating arrays. This provides additional functionality and protection in the areas in which it is needed. Further the ceramic coating may be omitted in areas where it is not required, thereby reducing the overall weight of the enclosure.

In some non-claimed embodiments, in addition to or instead of the ceramic coating, the material comprises a layer of silicone, e.g. provided at the interior of the enclosure such that the CMC and/or ceramic coating is coated by a layer of silicone. For example, this may be in the form or a silicone sheet or silicone applied via a spray.

A silicone layer has been found to provide beneficial thermal and/or dielectric performance of the enclosure. In addition, silicone is an intumescent substance and so is beneficial in the event or a fire or high temperature event. Silicone materials can also help to protect against certain environmental conditions, such as "salt fog" within the enclosure.

In some embodiments, the enclosure comprises a layer of any suitable intumescent substance e.g. provided at the interior of the enclosure such that the CMC and/or ceramic coating is coated by a layer of intumescent material.

In some embodiments, the silicone coating (or other intumescent coating) may be applied to the CMC in some locations and not in others. For example, the coating may be applied to the CMC in locations where there is a risk of intense heat and/or debris. In some embodiments, the coating may be applied to the CMC in predetermined arrays, e.g. repeating arrays. This provides additional functionality and protection in the areas in which it is needed. Further the coating may be omitted in areas where it is not required, thereby reducing the overall weight of the enclosure.

In some embodiments, electrochemical power unit comprises a battery and/or auxiliary systems. The electrochemical power unit may be known as an Energy Storage Unit (ESU). In some cases, an ESU may be is connected to other ESUs to form an Energy Storage System (ESS).

Optionally the ceramic coating is applied to the CMC via thermal spraying (e.g. thermal plasma spraying). The thermal spraying may comprise thermal plasma spraying, combustion wire spraying, combustion powder spraying, electric arc spraying, combustion flame spraying, high velocity oxy fuel spraying, spraying using a standard flame gun, vacuum spraying, and/or any other suitable spraying technique.

Optionally, the ceramic coating applied to the CMC comprises a thickness of in the range of from about 30 microns to 1000 microns, for example from about 100 microns to about 500 microns, for example from about 200 microns to about 300, for example about 250 microns.

It has been found that applying the ceramic coating to the CMC via thermal plasma spraying results in a coating that acts as a very good fire shield. Flames do not degrade or penetrate the ceramic coating and the CMC adds integrity to the fire shield.

The ceramic coating and CMC deflect metallic shrapnel, thereby protecting any components distal the CMC (with respect to the ceramic coating or internal volume), e.g. insulation material and/or composite materials, therefore protecting the structure of the enclosure from heat damage.

Optionally, the material is configured to insulate between an innermost portion of a respective component, with respect to the internal volume, and an outmost portion of the respective component, with respect to the internal volume (i.e. by reducing a temperature between the innermost portion and the outermost portion).

Optionally, the material is configured to insulate between an innermost portion of the material, with respect to the internal volume, and an outermost portion of the material, with respect to the internal volume (i.e. by reducing a temperature between the innermost portion and the outermost portion).

Optionally, a component of the material is formed from CMC and a ceramic coating. The component is configured to act as an insulator by reducing a temperature between an innermost portion of the component, with respect to the internal volume, and an outermost portion of the component, with respect to the internal volume. Optionally, the component formed by the CMC and ceramic coating is configured to reduce a temperature between an innermost portion of the component, with respect to the internal volume, and an outermost portion of the component, with respect to the internal volume by up to 600°C, for example up to in the range of about 200 to about 600°C, for example up to in the range of about 300 to about 500°C, for example by about 400°C, for example by about 300°C.

In this way, an insulating effect is achieved, reducing the temperature to within a predetermined range in which components distal the CMC (with respect to the ceramic coating or internal volume) are configured to operate.

Optionally, a component of the material is formed from CMC and a ceramic coating. The component is configured to withstand temperatures up to about 2200°C, for example up to about 2000°C. For example, the component formed by the CMC and ceramic coating may be configured to withstand peak temperatures up to 2000°C. For example, the component formed by the CMC and ceramic coating may be configured to withstand continuous temperatures up to about 1800°C, for example up to up to in the range of about 1200 to about 1600°C, for example by about 1600°C.

Accordingly, the component comprising the CMC and ceramic coating will function at high temperatures generated in the event of a battery fire, explosion or other thermal event.

The CMC and ceramic coating together form a first component located proximal the internal volume.

In this way, the first component is located adjacent the potential fire and/or explosive source, and thereby acts to protect other components of the material that are located distal the CMC with respect to the ceramic coating or internal volume.

In some embodiments, the first component may be termed an inner component.

Optionally, the material forming the enclosure comprises a plurality of components.

The material comprises a second component provided distal the first component or CMC with respect to the internal volume and comprising an insulating material.

In this way the second component acts to support the CMC or first component and the CMC or first component acts to provide protection to the second component. Furthermore, the insulating material acts to further reduce the temperature to within a predetermined range in which components distal the second component (with respect to the ceramic coating or internal volume) are configured to operate.

The insulating material comprises a microporous insulation configured to create the drop in temperature, keeping it sufficiently cool outside the enclosure.

In some embodiments, the second component may be termed an insulation component.

Optionally, the second component is configured to reduce a temperature between an innermost portion of the second component, with respect to the internal volume, and an outermost portion of the second component, with respect to the internal volume. For example, the second component is configured to reduce a temperature between an innermost portion of the component, with respect to the internal volume, and an outermost portion of the component, with respect to the internal volume by up to 1000°C, for example up to in the range of about 500 to about 1000°C, for example up to in the range of about 600 to about 900°C, for example by about 850°C, for example up to in the range of about 600 to about 650°C.

Optionally, the second component is configured to withstand temperatures up to about 1500°C, for example up to in the range of about 1000 to about 1500°C, for example up to in the range of about 1100 to about 1250°C, for example up to 1200°C.

In this way, due to the temperature reduction effected by the CMC or first component, the second component will function at the necessary temperature in the event of a battery fire, explosion or other thermal event.

In some embodiments, the second component can be custom made and formed into complex shapes, thicknesses and/or densities to manage areas of varying heat flux. This optimised design approach saves weight. For example, a thicker component can be provided directly above cell vents, as compared to other areas, that may be thinner or even non-existent.

In some non-claimed embodiments, the second component may be provided in selected areas of the enclosure, in other words, the second component may be provided so that it does not extend across the whole area of the enclosure. In this way, the second component can be used only where needed for a particular application.

Optionally, the material further comprises a third component provided distal the CMC or first component, optionally distal the second component, with respect to the internal volume, wherein the third component comprises a composite material.

In this way, the third component contributes to the overall integrity of the enclosure, and contributes to protecting the internals of the enclosure from the ambient environmental conditions such as salt and spray or hydraulic fluid.

In some embodiments, the third component comprises a carbon epoxy composite.

In some embodiments, the third component may be termed an outer component and/or a support component.

In some embodiments, the second component acts as a structural bridge between the first and third components, to make the overall structure of the enclosure more rigid.

Optionally, the material is configured to reduce a temperature between an innermost portion of material, with respect to the internal volume, and an outermost portion of the material, with respect to the internal volume. For example, the material comprising the first, second and third components is configured to reduce a temperature between an innermost portion of the first component, with respect to the internal volume, and an outermost portion of the third component, with respect to the internal volume by up to 2000°C, for example up to in the range of about 750 to about 1800°C, for example up to in the range of about 1200 to about 1600°C, for example by about 1400°C, for example up to in the range of about 900 to about 1100°C, for example up to in the range of about 1000 to about 1050°C.

The or each component (and/or the CMC) of the material functions to step down the temperature from a region of relatively high temperature within the internal volume, to a region of relatively low temperature outside the enclosure. In this way, the enclosure acts to protect components outside the enclosure from the high temperatures generated by a thermal event within the enclosure.

The third component ensures that the final temperature reduction from the temperature of a portion of the third component proximal the internal volume, to a desired outside surface temperature is achieved and doing so, protects vulnerable components (e.g. aircraft components) that the third component may be in contact with.

Optionally, the third component is configured to withstand temperatures up to about 500°C, for example up to about 450°C, for example up to in the range of about 100 to about 400°C, for example up to in the range of about 150 to about 360°C, for example up to about 150°C.

It will be appreciated that each of the first, second and third components provides both thermal and structural functions to protect the interior and exterior of the enclosure.

Optionally, the third component comprises a non-porous material.

The nonporous nature of the third component inhibits or prevents unwanted gas emissions from a thermal event reaching an exterior of the enclosure.

Optionally, two or more of the plurality of components and/or CMC are integrally formed, e.g. bonded together.

Optionally, a scrim is provided between two or more of the components and/or CMC, optionally wherein the scrim comprises a heat resistance material such as glass and/or quartz.

The scrim acts to provide a substrate to improve bonding with an adjacent component.

Optionally, the enclosure is configured to completely surround the internal volume.

In this way, the contents of the enclosure are completely contained. Optionally the enclosure comprises a container (e.g. a body) and a lid. In some embodiments, the container comprises a tray.

Optionally, the ceramic coating comprises a blend of ceramics.

Optionally, the ceramic coating comprises one or more of: aluminium oxide, titanium oxide and aluminium silicate and ytterbium disilicate.

Optionally, the CMC comprises carbon fibres embedded in a ceramic matrix, e.g. the ceramic matrix comprises silicon oxide, aluminium oxide, iron oxide, calcium oxide, magnesium oxide, sodium oxide, potassium oxide, and/or potassium disilicate.

Optionally, the enclosure is configured for use on an aircraft, e.g. an eVTOL (electric vertical take-off and landing) aircraft.

In a further aspect, a material for providing thermal protection is provided, the material comprising a ceramic matrix composite (CMC).

Optionally, the CMC forms a first component of the material.

In exemplary embodiments, the first component is formed from CMC. For example, the first component is fabricated or manufactured from CMC in exemplary embodiments.

In exemplary embodiments, the first component is intended to be positioned adjacent to an area in which there is a risk of a thermal event occurring, e.g. adjacent a battery pack or cell that could become overcharged, over-discharged, short circuited or any event that leads to a thermal runaway.

In exemplary embodiments, the CMC is positioned so as to insulate between an innermost portion of the first component and an outermost portion of the first component (e.g. with respect to an area in which there is a risk of a thermal event occurring).

The ceramic coating is applied to the CMC on a side of the first component intended to be adjacent an area in which there is a risk of a thermal event occurring.

Optionally, the ceramic coating is bonded to the CMC via thermal spraying.

In some non-claimed embodiments, the ceramic coating may be applied to the CMC in some locations and not in others. For example, the ceramic coating may be applied to the CMC in locations where there is a risk of intense heat and/or debris. In some embodiments, the ceramic coating may be applied to the CMC in predetermined arrays, e.g. repeating arrays. This provides additional functionality and protection in the areas in which it is needed. Further the ceramic coating may be omitted in areas where it is not required, thereby reducing the overall weight of the material.

In some non-claimed embodiments, in addition to or instead of the ceramic coating, the material comprises a layer of silicone, such that the CMC and/or ceramic coating is coated by a layer of silicone. For example, this may be in the form or a silicone sheet or silicone applied via a spray.

A silicone layer has been found to provide beneficial thermal and/or dielectric performance of the material. In addition, silicone is an intumescent substance and so is beneficial in the event or a fire or high temperature event. Silicone materials can also help to protect against certain environmental conditions, such as "salt fog" within the enclosure.

In some embodiments, the material comprises a layer of any suitable intumescent substance, for example located proximal an area in which there is a risk of thermal event occurring.

In some embodiments, the coating may be applied to the CMC in some locations and not in others. For example, the coating may be applied to the CMC in locations where there is a risk of intense heat and/or debris. In some embodiments, the coating may be applied to the CMC in predetermined arrays, e.g. repeating arrays. This provides additional functionality and protection in the areas in which it is needed. Further the coating may be omitted in areas where it is not required, thereby reducing the overall weight of the material.

A component of the material is formed from CMC and a ceramic coating. The component is configured to act as an insulator by reducing a temperature between a portion of the component proximal the ceramic coating and a portion of the component distal the ceramic coating. Optionally, the component formed by the CMC and ceramic coating is configured to reduce a temperature between a portion of the component proximal the ceramic coating and a portion of the component distal the ceramic coating by up to 600°C, for example up to in the range of about 200 to about 600°C, for example up to in the range of about 300 to about 500°C, for example by about 400°C, for example about 300°C.

Optionally, the component is configured to withstand temperatures up to about 2200°C, for example up to about 2000°C. For example, the component formed by the CMC and ceramic coating may be configured to withstand peak temperatures up to 2000°C. For example, the component formed by the CMC and ceramic coating may be configured to withstand continuous temperatures up to about 1800°C, for example up to in the range of about 1200 to about 1600°C, for example by about 1600°C.

The CMC and ceramic coating together form a first component.

The material comprises a plurality of components.

The material comprises a second component provided distal the CMC or first component (with respect to an area in which there is a risk of a thermal event occurring) and comprising an insulating material.

Optionally, the second component is configured to insulate (i.e. reduce a temperature) between a portion of the second component proximal the CMC and a portion of the second component distal the CMC. For example, the second component is configured to reduce a temperature between a portion of the second component proximal the ceramic coating and a portion of the second component distal the ceramic coating by up to 1000°C, for example up to in the range of about 500 to about 1000°C, for example up to in the range of about 600 to about 900°C, for example by about 850°C, for example up to in the range of about 600 to about 650°C.

Optionally, the second component is configured to withstand temperatures up to about 1500°C, for example up to in the range of about 1000 to about 1500°C, for example up to in the range of about 1100 to about 1250°C, for example up to 1200°C.

Optionally, the material further comprises a third component provided distal the CMC or first component, optionally distal the second component, with respect to an area in which there is a risk of a thermal event occurring, wherein the third component comprises a composite material.

Optionally, the material comprising the first, second and third components is configured to insulate (e.g. reduce a temperature) between a proximal portion the first component (with respect to an area in which there is a risk of a thermal event occurring), and a distal portion of the third component. For example, the material comprising the first, second and third components is configured to reduce a temperature between a proximal portion the first component, with respect to the ceramic coating, and a distal portion of the third component, with respect to the ceramic coating by up to 2000°C, for example up to in the range of about 750 to about 1800°C, for example up to in the range of about 1200 to about 1600°C, for example by about 1400°C, for example up to in the range of about 900 to about 1100°C, for example up to in the range of about 1000 to about 1050°C.

Optionally, the third component is configured to withstand temperatures up to about 500°C, for example up to in the range of about 100 to about 450°C, for example up to in the range of about 150 to about 400°C, for example up to in the range of about 150 to about 360°C.

Optionally, the third component comprises a non-porous material.

Optionally, two or more of the plurality of components and/or the CMC are integrally formed, e.g. bonded together.

Optionally, a scrim is provided between two or more of the components and/or CMC e.g. the scrim comprises a heatproof material such as glass and/or quartz.

Optionally, the ceramic coating comprises a blend of ceramics.

Optionally, the ceramic coating comprises one or more of: aluminium oxide, titanium oxide and aluminium silicate and ytterbium disilicate.

Optionally, the CMC comprises carbon fibres embedded in a ceramic matrix, e.g. the ceramic matrix comprises silicon oxide, aluminium oxide, iron oxide, calcium oxide, magnesium oxide, sodium oxide, potassium oxide, and/or potassium disilicate.

Optionally, the material comprises a mesh or gauze layer. This prevents or inhibits expulsion of debris from the enclosure and also acts as a flame break. In some embodiments, the mesh or gauze may comprise a metal arrangement, e.g. steel or alloy (e.g. an Inconel^{®}).

Optionally, the mesh or gauze layer may be integral with the material or may be affixed to an internal or external surface of the material. Optionally, the mesh or gauze may be provided in some regions and not others, for example, the mesh or gauze may be provided to cover a vent.

In a further aspect a structure comprising the material disclosed herein is provided.

Optionally, the structure is configured to be located proximal a region of potentially high temperature, and wherein the structure is configured such that the CMC (or the ceramic coating in some embodiments) is located proximal the region of potentially high temperature.

Optionally, the structure comprises an aircraft component.

In a further aspect, a method of manufacturing a material as disclosed herein is provided, the method comprising:
a. providing a CMC, and
b. providing a substrate to support the CMC.

Optionally, wherein the method further comprises thermal spraying (e.g. plasma spraying) a ceramic coating onto a surface of the CMC.

In exemplary embodiments, the CMC forms a first component of the material.

In exemplary embodiments, the first component is formed from CMC. For example, the first component is fabricated or manufactured from CMC in exemplary embodiments.

Optionally, the CMC and the ceramic coating together form the first component.

Optionally, for example, prior to step a, providing a second component comprising an insulation material and applying the CMC provided at step a to the second component. Optionally bonding the CMC and the second component together, optionally after step b.

Optionally, the substrate comprises a third component comprising a composite material. Optionally applying the second component to the third component. Optionally bonding the second and third components together.

Optionally, the CMC and/or second component and/or third component are bonded together via curing.

Optionally, the third component is provided by providing a composite pre-preg which is then cured to form the third component.

Optionally, the CMC is provided by providing a fabric (e.g. carbon fibre), applying a ceramic matrix to the fabric to form a coated fabric, and curing the coated fabric.

Optionally, the method further comprises applying a layer of an intumescent substance to coat the CMC and/or the first component.

Optionally, the method further comprises applying a layer of silicone to coat the CMC and/or the first component.

Optionally, the method further comprises applying a mesh or gauze layer to the material. In some embodiments, the mesh or gauze may comprise a metal arrangement, e.g. steel or alloy (e.g. an Inconel^{®}). Optionally, the mesh or gauze layer may be integral with the material or may be affixed to an internal or external surface of the material. Optionally, the mesh or gauze may be provided in some regions and not others, for example, the mesh or gauze may be provided to cover a vent.

Optionally, the method comprises a post-curing step in which the CMC is cured a second time. For example, the post-curing step may comprise exposing the CMC to temperatures in the range of approximately 100 to 600°C, e.g. approximately 200°C, e.g. for approximately 24 hours. In this way, excess water may be removed from the CMC. Release of water from the CMC in the event of a thermal event has been found to cause distortion in the CMC, thereby compromising the integrity of the ceramic coating (when present). Removing water from the CMC in the post-curing step reduces the extent to which the CMC becomes distorted, consequently improving the integrity of the ceramic coating layer (when present) provided on a surface of the CMC.

According to a further aspect, a method of manufacturing a material disclosed herein comprises one or more of the following steps:
a. providing a composite pre-preg;
b. providing an insulation component (optionally the insulation component comprises a second component);
c. providing a fabric and a ceramic matrix and applying the ceramic matrix to the fabric to form a coated fabric;
d. applying the insulation component to the composite pre-preg;
e. applying the coated fabric to the insulation component;
f. curing the composite pre-preg and/or the coated fabric, such that the cured composite pre-preg provides a third component, and/or the cured coated fabric provides the CMC;
g. thermal spraying (e.g. thermal plasma spraying) a ceramic coating onto a surface of the CMC, optionally such that the CMC and the ceramic coating together comprise a first component.

Optionally curing the provided elements bonds the CMC to the second component and/or the second component to the third component.

Optionally, a scrim is provided between two or more of the components (optionally prior to curing), optionally wherein the scrim comprises a heatproof material such as glass and/or quartz.

According to a further aspect, there is provided an enclosure defining an internal volume for housing an electrochemical power unit, wherein the enclosure has an internal surface defined by one or more walls, wherein the or each wall is formed from a ceramic matrix composite (CMC).

In exemplary embodiments, the or each wall is formed from a CMC coated with a ceramic coating. In exemplary embodiments, the ceramic coating is provided proximal the internal volume.

In exemplary embodiments, the or each wall comprises a first component formed of CMC.

In exemplary embodiments, the or each wall is formed from a first component such that the internal surface is defined by the first component. In exemplary embodiments, the first component of each wall is formed of CMC.

In this way, the entire internal surface of the enclosure is defined by a CMC, optionally with the ceramic coating provided on an inward facing surface of the CMC.

In exemplary embodiments, the or each wall comprises a second component provided distal the first component or CMC with respect to the internal volume and comprising an insulating material.

In exemplary embodiments, the or each wall comprises a third component provided distal the CMC or first component, optionally distal the second component, with respect to the internal volume, wherein the third component comprises a composite material.

It will be appreciated that the optional features described herein may apply to any aspect disclosed herein. All combinations contemplated are not recited explicitly for the sake of brevity.

### BRIEF DESCRIPTION OF THE FIGURES

Embodiments disclosed herein will now be described with reference to the accompanying drawings, in which:
Figure 1 shows a schematic perspective view of an enclosure according to the present disclosure;
Figure 2 shows a schematic cross section of a material from which the enclosure of Figure 1 is made;
Figure 3 shows a flow chart of a method of manufacture of the enclosure of Figure 1;
Figure 4 shows a graph of the temperature measured at different regions of the material in the event of a high temperature event; and
Figure 5 illustrates the temperature change across each component of the material in the event of a high temperature event, and the specific insulation effectiveness of each component.

### DETAILED DESCRIPTION

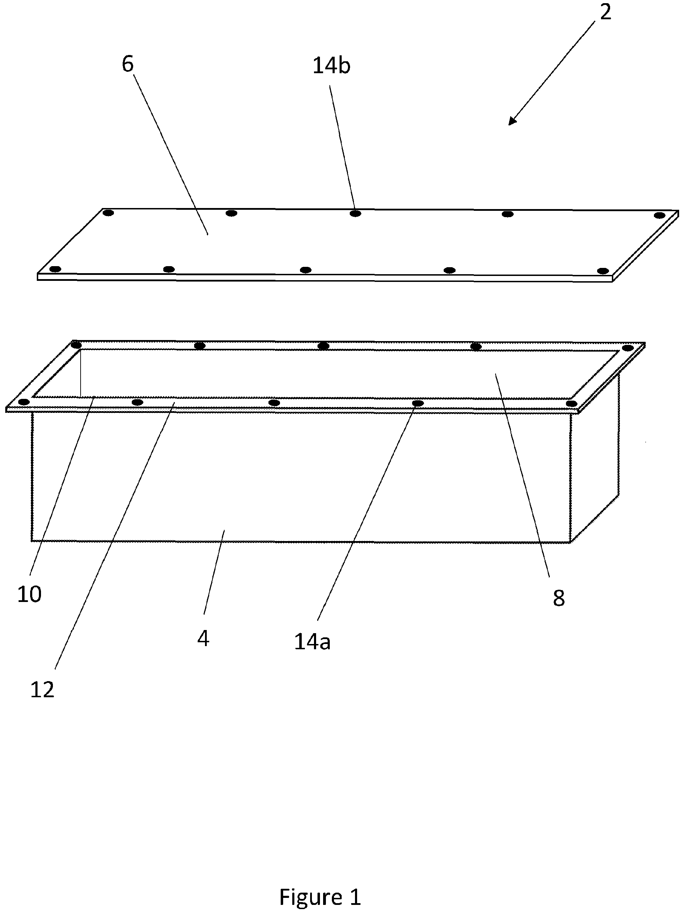

With reference to Figure 1, an enclosure 2 is provided for housing an electrochemical power unit (not shown), for example comprising a battery and/or one or more auxiliary systems such as a battery management system and/or a cooling system. The enclosure disclosed herein may be thought of as a "structural insulation system".

The enclosure comprises a container body portion 4 and a lid portion 6. The body 4 defines an internal volume 8 in which the battery can be located. The lid 6 and body 4 are arranged to be attached to each other such that the internal volume 8 is completely enclosed by the enclosure 2.

In some embodiments, the battery is attached to the lid portion 6 and enclosed by the body portion 4. In other embodiments, the battery is placed in the body portion 4 and the lid 6 attached to enclose the space.

A gasket (not shown) is provided between the lid 6 and body 4. In some embodiments, the gasket comprises silicone.

In the illustrated embodiment, the body 4 has an opening 10 through which the battery can be introduced to and removed from the internal volume 8 of the enclosure 2. The body 4 also includes a flange 12 extending from the opening 10 and arranged such that the lid 6 contacts the flange 12 when the lid 6 and body 4 are coupled together. The body 4 and lid 6 may be fastened together via any suitable fastening means. In the illustrated embodiment, the flange 12 of the body 4 is provided with a series of apertures 14a and the lid 6 is provided with a corresponding series of apertures 14b, such that a fastening device e.g., a bolt, can be passed through the apertures of the lid 14b and the corresponding apertures of the body 14a and secured, e.g., by a nut, to secure the lid 6 to the body 4 together. In this way, a battery can be securely contained within the enclosure 2.

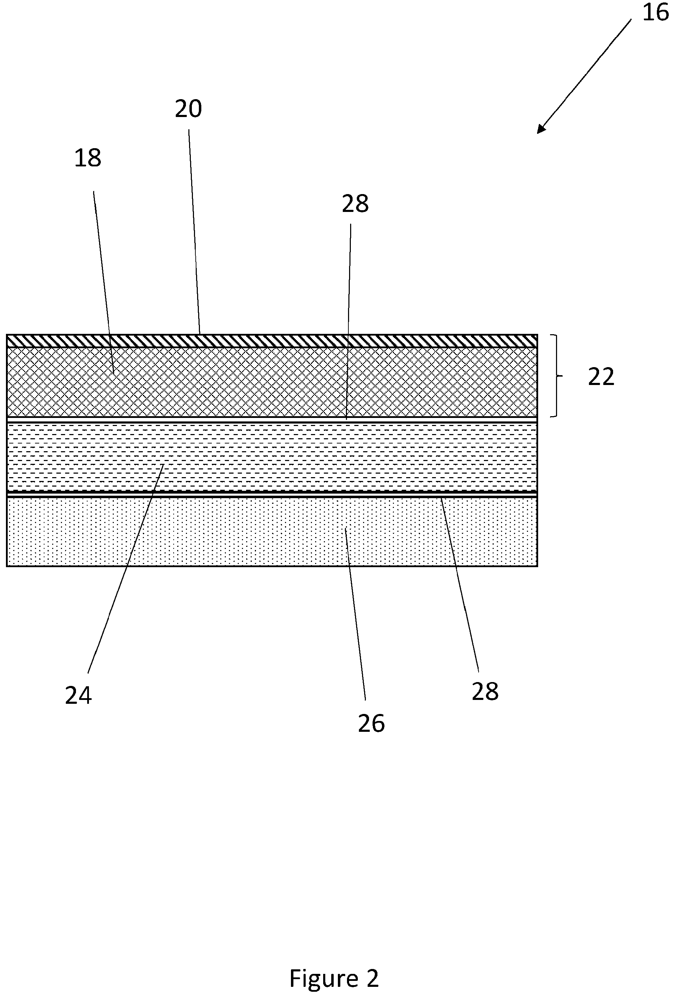

At least portions of the body 4 and/or lid 6 of the enclosure are formed of a material 16, a cross section through which is illustrated in Figure 2. The material 16 includes a ceramic matrix composite (CMC) 18.

The CMC 18 forms a first component 22 of the material 16. In exemplary embodiments, the first component 22 is formed from CMC 18. For example, the first component 22 is made from, fabricated, or manufactured from CMC 18 in exemplary embodiments.

The first component 22 is located proximal the internal volume 8 of the enclosure 2. In exemplary embodiments, the first component 22 is arranged so as to define an internal surface of the enclosure 6.

As can be seen in Figure 1, the enclosure 2 defines an internal surface that includes a plurality of walls. In the illustrated embodiment, the enclosure 2 is defined by a body 4 and a lid 6, however it should be understood that the enclosure 2 may be defined by one any number of pieces material that has been arranged into an enclosure.

In exemplary embodiments, each wall of the enclosure 2 has a first component 22 that is formed of CMC. In exemplary embodiments, each wall of the enclosure 2 has a cross section similar to that shown in Figure 2. The walls of the enclosure 2 are arranged relative to each other such that the first component 22 of each wall is positioned proximal the internal volume 8.

In Figure 2, the CMC has a ceramic coating 20 such that the ceramic coating 20 is provided proximal the internal volume 8 of the enclosure 2. As will be described in further detail below, the ceramic coating 20 is applied to the CMC 18 via thermal spraying, for example plasma spraying.

The first component 22 of each wall of the enclosure 2 is formed from a CMC 18 that is coated with the ceramic coating 20. The ceramic coating 20 is provided over an inward facing surface of the CMC 18 such that the ceramic coating faces inwards relative to the internal volume 8.

In this way, in such an embodiment, the entire internal surface of the enclosure 2 is defined by a CMC 18, with the ceramic coating 20 provided on an inward facing surface of the CMC 18.

In some non-claimed embodiments, in addition to or instead of the ceramic coating, the interior of the enclosure 2 comprises a layer of silicone (not shown), for example in the form or a silicone sheet or applied via a spray. This has been found to improve the thermal and/or dielectric performance of the enclosure. In addition, silicone is an intumescent substance and so is beneficial in the event or a fire or high temperature event. Silicone materials can also help to protect against certain environmental conditions, such as "salt fog" within the enclosure.

In some non-claimed embodiments, in addition to or instead of the ceramic coating, the interior of the enclosure 2 comprises a layer of any suitable intumescent material (not shown).

In Figure 2, the CMC 18 and the ceramic coating 20 together form a first component 22 of the material 16. Put another way, the first component 22 includes both the CMC 18 and the ceramic coating 20. In this way, the first component 22 has been formed from the CMC 18 with a ceramic coating 20 applied thereon.

The first component is arranged to act as an insulator by reducing a temperature by about 300°C between an innermost portion of the component, with respect to the ceramic coating 20 (or the internal volume 8), and an outermost portion of the component 22, with respect to the ceramic coating 20. In the illustrated embodiments, the ceramic coating 20 is provided adjacent the internal volume 8. Accordingly, the first component 22 is provided adjacent the internal volume 8 of the enclosure 2. In other words, the first component is provided adjacent where a thermal event, e.g. battery fire, may occur. The first component 22 is designed to withstand temperatures of up to about 2000°C.

As can be seen in Figure 2, the material 16 includes a plurality of components. In this way, each wall of the enclosure 2 includes a plurality of components. In the illustrated embodiment, three main components are provided. As such, each wall of the enclosure 2 has been formed from the three components. The second component 24 is provided distal the first component 23 with respect to the internal volume 8 (i.e., with respect to the ceramic coating 20) and is formed of an insulating material.

The second component 24 is configured to reduce a temperature by about 600-650°C (e.g. about 621°C) between an innermost portion of the second component 24, with respect to the internal volume 8 (i.e., with respect to the ceramic coating 20), and an outermost portion of the second component 24, with respect to the internal volume 8 (i.e., with respect to the ceramic coating 20). The second component 24 is configured to withstand temperatures up to between about 1100 - 1250°C.

In some regions of the enclosure 2, the second component 24 may have a reduced thickness.

The third component 26 is provided distal the second component 24 (or distal the first component 22 when the second component is omitted) with respect to the internal volume 8 (i.e., with respect to the ceramic coating 20). In other words, the second component 24 is provided in between the first and third components 22, 26. The third component 26 is formed of a composite material.

The material 16 formed of the first, second and third components 22, 24, 26 is arranged to reduce a temperature by about 1000-1050°C (e.g. about 1036°C) between an innermost portion of the first component 22, with respect to the internal volume 8 (i.e., with respect to the ceramic coating 20), and an outermost portion of the third component 26, with respect to the internal volume 8 (i.e., with respect to the ceramic coating 20).

The third component is configured to withstand temperatures up to between 100 - 360°C. The third component also is formed of a non-porous material.

In the illustrated embodiment shown in Figure 2, the first, second and third components 22, 24, 26 are provided as first, second and third layers of the material 16.

The first, second and third components 22, 24, 26 are integrally formed, for example, by being bonded together.

In the illustrated embodiment, a scrim 28 is provided between the first and second components 22, 24 and also between the second and third components 24, 26. For example, this may be provided to improve bonding between the first and third components 22, 26 respectively.

The scrims 28 and the second component 24 may be integrally formed, for example the scrim 28 proximal the first component may be stitched to the scrim 28 proximal the third component 26 using a heat resistant thread (e.g. glass thread) which passes through the second component 24 to form a quilt-like arrangement. This ensures the scrims 28 are tied together and also retain the second component 24 in place.

In some embodiments, the material comprises a mesh or gauze layer (not shown). This prevents or inhibits expulsion of debris from the enclosure and also acts as a flame break. In some embodiments, the mesh or gauze may comprise a metal arrangement, e.g. steel or alloy (e.g. an Inconel^{®}). In some embodiments, the mesh or gauze layer may be integral with the material or may be affixed to an internal or external surface of the material. In some embodiments, the mesh or gauze may be provided in some regions and not others, for example, the mesh or gauze may be provided to cover a vent.

Although the enclosure 2 has been described above as having at least portions of the body 4 and/or lid 6 formed from the material 16, it should be understood that, in some embodiments, each wall of the enclosure is formed of the material 16 (i.e. the body 4 and the lid 6 in Figure 1).

In exemplary embodiments, the walls of the enclosure 2 are completely formed from the material 16, although it should be understood that additional elements may be present in some embodiments (e.g. for securing the components of the material together, or for fixing the various walls in place).

In such an embodiment, the walls of the enclosure define an internal surface. The first component 22 of each wall (i.e. the CMC, or the CMC 18 and the ceramic coating 20) forms the entire internal surface of the enclosure 2.

Put another way, the first component 22 extends about the internal volume 8 so as to form a continuous internal surface proximal to the internal volume.

Forming the internal surface of the enclosure 2 from the first component 22 provides structural insulation that can withstand both the pressures and temperatures of a thermal event within the internal volume 6. Since the component 22 made from CMC 18 is positioned immediately adjacent to the internal volume 8, the CMC 18 can act as an effective insulator or fire shield, insulating components distal the CMC from high temperatures that may occur in the internal volume 6.

The enclosure illustrated in Figure 1 and described above can be used in any suitable environment. However, the enclosure 2 is particularly suitable for aerospace applications, in particular, for battery enclosures on electric aircraft, e.g. eVTOL (electrical vertical take-off and landing aircraft), eCTOL (electric Conventional take-off and landing) and/or electric hybrid aircraft.

In exemplary embodiments of the material 16 disclosed herein, the CMC 18 is formed of a fabric and a matrix. The fabric may include carbon fibres embedded in a ceramic matrix. In other embodiments, any suitable fabric may be used. The matrix may consist of a blend of ceramic components.

In exemplary embodiments, the ceramic coating 20 includes a blend of high purity ceramic components.

In exemplary embodiments, the insulation material of the second component 24 may include any suitable insulation material.

In exemplary embodiments, the third component comprises a composite panel, e.g. a carbon fibre reinforced polymer panel (CFRP panel). The composite panel may comprise a composite shell. The shell may comprise any fibre reinforced polymer (FRP).

In exemplary embodiments, the scrim layers 28 may be formed from a heat resistant material such as glass and/or quartz.

In an exemplary embodiment, the fabric of the CMC 18 is formed of multiple layers of a 3K polyacrylonitrile carbon in a 200 g/m² 2x2 twill.

In an exemplary embodiment, the matrix of the CMC 18 consists of a blend of one or more of: silicon oxide, silicon carbide, aluminium oxide, iron oxide, calcium oxide, magnesium oxide, sodium oxide, potassium oxide, fumed silica, titanium oxide, and potassium disilicate.

In an exemplary embodiment, the ceramic coating 20 includes a blend of at least one of: aluminium oxide, titanium oxide, aluminium silicate, titanium dioxide, mullite and ytterbium disilicate.

The insulation material of the second component 24 is formed of a microporous insulation which in an exemplary embodiment can be made from at least one of: silica, aluminium sodium silicate, fumed silicon dioxide, S2 glass fibres, trimethylsilyl (TMS) aerogel, and titanium dioxide.

In an exemplary embodiment, the third component is a panel made from a polyacrylonitrile carbon epoxy composite assembled in multiple layers.

In an exemplary embodiment, the scrim layers are formed from a thin 80gsm woven S2 glass or high purity quartz cloth.

In use, a battery (not shown) is placed in the internal volume 8 of the body 4. The lid 6 is attached to the body 4 by a suitable fastening means such that the battery is completely enclosed by the enclosure 2.

In the event of a battery fire or other explosive event, extremely high temperatures are generated in the internal volume 8. In addition, in the event of an explosion, high velocity shrapnel and the like may be projected from the battery.

The first component 22, formed of the CMC 18 and the ceramic coating 20, is located immediately next to the internal volume 8 and so is exposed to the high temperatures and explosive forces of the thermal event. The first component 22 acts to lower these temperatures to more manageable temperatures for the second and third components 24, 26 beyond. In this way, the first component 22 contributes to the function of the enclosure in acting as a fire shield.

The ceramic coating 20 acts to protect the CMC 18 from high temperature oxidative degradation. Furthermore, the CMC 18 and ceramic coating 20 are resistant to any hot corrosive gases that are generated by the thermal event.

The ceramic coating 20 withstands high temperatures, thereby protecting the CMC 18. The ceramic coating 20 also has advantageous dielectric properties which act to electrically isolate the interior of the enclosure 2 from the remainder of the enclosure components, which may comprise potentially conductive elements (e.g. polyacrylonitrile fibres in the CMC 18). Furthermore, the ceramic coating 20 is chemically inert, which is advantageous for the longevity of the in the service life of the enclosure and is beneficial against hot ejected electrolyte vapour. Additionally, the ceramic coating 20 has good wear resistance and provides protection to the CMC layer against debris and mechanical damage.

In addition, the CMC 18 and ceramic coating 20 together provide a high integrity structural insulation that withstands the pressures of thermal events and deflects any high velocity shrapnel or the like projected from the battery.

The second component 24 acts to further insulate against the high temperatures generated in the internal volume 8, whilst being protected from the extreme high temperatures and structural degradation by the first component 22.

The second component 24 also acts as a structural bridge between the first and third components 22, 26, thereby making the overall structure of the enclosure 2 more rigid.

The third component 26 acts to further insulate components external to the enclosure 2 from any thermal events. Furthermore, the non-porous nature of the third component 26 inhibits or prevents unwanted gas emission from the thermal event reaching an exterior of the enclosure 2.

The third component 26 also contributes to the overall integrity of the enclosure 2 and protects the internal volume 8 of the enclosure 2 from the ambient environmental conditions external to the enclosure 2, such as salt and spray or hydraulic fluid.

In this way, each component 22, 24, 26 of the material 16 functions to step down the temperature from a region of relatively high temperature within the internal volume 8, to a region of relatively low temperature outside the enclosure 2. In this way, components outside the enclosure 2 are protected from the high temperatures and potential structural damage generated by a thermal event within the enclosure 2.

Furthermore, the use of the first, second and third components provides a strong yet light weight enclosure, for example that is strong enough to handle high G loadings from in air manoeuvres or crash landings when the enclosure is used on an aircraft. The lightweight properties of the enclosure make it particularly suitable to electric aircraft applications.

It will be appreciated from the above description that each of the first, second and third components 22, 24, 26 provide both structural and thermal functions to protect the interior and exterior of the enclosure 2.

As described above, in some regions of the enclosure, the ceramic coating 20 may be omitted. In some regions of the enclosure, the thickness of the second component may be reduced, or the second component may be omitted entirely. This allows the material to be tailored to the expected thermal and explosive conditions, whilst keeping the overall weight of the enclosure low.

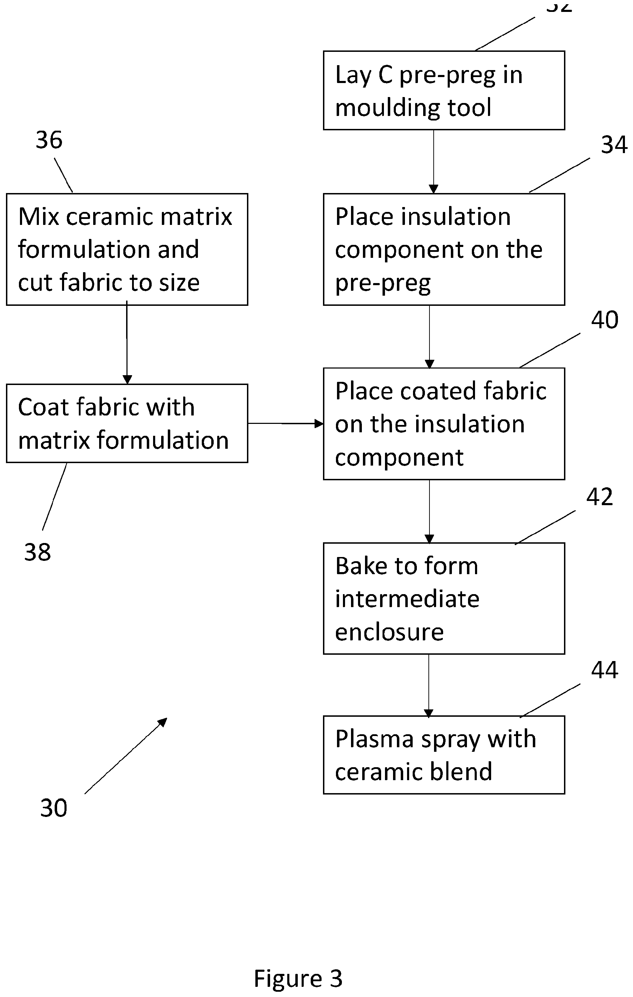

With reference to Figure 3, a method 30 of manufacturing the material 16 disclosed herein is illustrated. In a first step 32, carbon pre-preg is laid down in a moulding tool. In a specific example, the pre-preg is placed down in nine layers. This carbon pre-preg will eventually form the third component 26.

An insulation component 24 (when present), sandwiched between a pair of scrims 28 is placed on top of the carbon pre-preg layer. This is carried out in a second step 34. The insulation component forms the second component 24.

To form the CMC 18, a ceramic matrix formulation is mixed 36, a desired fabric is cut to size, and the fabric is coated with the ceramic matrix 38 to form a coated fabric. The coated fabric is then placed on top of the insulation component 40.

The mould tool and all the layers are placed inside a vacuum bag and baked to cure 42. After baking, an intermediate enclosure is formed, including the CMC 18, second component 24 and third component 26.

The intermediate enclosure is removed from the mould. Optionally, the intermediate enclosure is cured a second time after removal from the mould. This is commonly termed a post cure step.

Optionally, the second curing step comprises a post-curing step in which the CMC is cured a second time. For example, the post-curing step may comprise exposing the CMC to temperatures in the range of approximately 100 to 600°C, e.g. approximately 200°C, e.g. for approximately 24 hours. In this way, excess water may be removed from the CMC, which reduces the extent to which the CMC becomes distorted caused by the release of water.

Following curing, the CMC 18 is plasma sprayed 44 with a ceramic blend to form the ceramic coating 20 (when present).

The same manufacture process is carried out for both the body 4 and the lid 6 to form the finished enclosure 2.

### Example

The material disclosed herein will now be explained with reference to the following nonlimiting example.

| **CMC Matrix Composition** | **w/w** |
|---|---|
| aluminium oxide | 4.104 |
| Optomix R42 retarder *(commercially available from Oscrete)* | 0.82935 |
| Iron oxide | 3.77055 |
| fumed silica | 3 |
| Silicon carbide | 5 |
| Silicon Oxide | 37.2609 |
| magnesium oxide (Optional) | 0 |
| potassium oxide (Optional) | 0 |
| sodium oxide (Optional) | 0 |
| potassium disilicate (Optional) | 3.5 |
| titanium oxide (Optional) | 3 |
| Sodium/Potassium Silicate sol 6 parts to 5 parts water | 37.2609 |
| Water | 2.2743 |
| **Total** | **100** |

| **Plasma spray ceramic coating Composition** | **% weight** |
|---|---|
| Alumina | 75 |
| Titania | 5 |
| Mullite | 20 |
| Ytterbium Disilicate | 0 |

| **Second Component core composition** | **% weight** |
|---|---|
| aluminium sodium silicate opacifier | 15 |
| fumed silicon dioxide | 75 |
| s2glass fibres | 10 |
| TMS Aerogel (optional) | 0 |
| TiO2 (optional) | 0 |

The fabric of the CMC 18 is formed of multiple layers of a 3K polyacrylonitrile carbon in a 200 g/m² 2x2 twill.

The third component is a panel made from a polyacrylonitrile carbon epoxy composite assembled in multiple layers.

The scrim layers are formed from a thin 80gsm woven S2 glass or high purity quartz cloth.

In some embodiments, the water in the CMC matrix composition is replaced, at least in part, with an organic solvent, e.g. acetone. This will more readily leave the CMC upon heating and so reduce distortion in the CMC layer.

The material is made in accordance with the method set out in Figure 3.

The resulting material from this specific example was tested under high heat conditions in accordance with ISO 2685 and was found to suffer no significant damage.

The resulting material was also tested in accordance with AC 20-135, which includes methods for fire testing of materials and components, e.g. for use in aerospace systems. Fire testing according to the AC 20-135 requires the component or system under test to be exposed to a 2000-degree Fahrenheit minimum average flame temperature. Test times range from five minutes for fire resistance to 15 minutes for fireproofing.

A fireproof material or component must withstand a 2000°F flame (~ 1090°C) (±150°F) for 15 minutes minimum while still fulfilling its design purpose and perform as well as or better than steel. When applied to materials and parts used to confine fires within designated fire zones, "fireproof" means that the material or part performs under conditions likely to occur in such zones and withstands a 2000°F flame (~ 1090°C) (±150°F) for 15 minutes minimum.

The results of the testing in accordance with AC 20-135 are provided in Table 1.

**Table 1**

| | Exterior surface (cold face) (°C) | | | Interior surface (hot face) (°C) | | 2-3 component interface (°C) | 1-2 component interface (°C) | |
|---|---|---|---|---|---|---|---|---|
| Duration of test (min) | Right hand side | Centre | Left hand side | Right hand side | Left hand side | Right hand side | Left hand side | Right hand side |
| 0.0 | 27 | 27 | 29 | 283 | 297 | 28 | 45 | 42 |
| 0.5 | 27 | 27 | 29 | 872 | 908 | 33 | 349 | 339 |
| 1.0 | 29 | 30 | 31 | 909 | 1029 | 51 | 531 | 529 |
| 1.5 | 32 | 32 | 33 | 937 | 1081 | 60 | 653 | 647 |
| 2.0 | 35 | 34 | 35 | 957 | 1098 | 67 | 724 | 710 |
| 2.5 | 38 | 37 | 38 | 993 | 1110 | 77 | 764 | 745 |
| 3.0 | 41 | 40 | 40 | 1042 | 1116 | 90 | 788 | 765 |
| 3.5 | 45 | 42 | 41 | 1054 | 1122 | 97 | 801 | 778 |
| 4.0 | 48 | 44 | 43 | 1075 | 1128 | 100 | 810 | 786 |
| 4.5 | 50 | 48 | 45 | 1091 | 1132 | 107 | 817 | 796 |
| 5.0 | 54 | 52 | 48 | 1103 | 1137 | 120 | 822 | 804 |
| 5.5 | 58 | 56 | 52 | 1108 | 1140 | 133 | 827 | 810 |
| 6.0 | 62 | 60 | 56 | 1114 | 1141 | 144 | 830 | 814 |
| 6.5 | 66 | 64 | 62 | 1119 | 1144 | 155 | 834 | 817 |
| 7.0 | 71 | 68 | 66 | 1123 | 1146 | 165 | 838 | 820 |
| 7.5 | 75 | 72 | 69 | 1127 | 1149 | 173 | 842 | 823 |
| 8.0 | 79 | 75 | 73 | 1129 | 1150 | 180 | 846 | 826 |
| 8.5 | 83 | 79 | 77 | 1130 | 1149 | 187 | 848 | 827 |
| 9.0 | 86 | 81 | 81 | 1133 | 1151 | 193 | 849 | 828 |
| 9.5 | 89 | 85 | 84 | 1135 | 1152 | 198 | 852 | 830 |
| 10.0 | 92 | 87 | 85 | 1138 | 1154 | 202 | 855 | 830 |
| 10.5 | 94 | 90 | 86 | 1139 | 1154 | 205 | 860 | 830 |
| 11.0 | 96 | 92 | 86 | 1140 | 1153 | 208 | 860 | 833 |
| 11.5 | 99 | 95 | 87 | 1143 | 1154 | 211 | 862 | 835 |
| 12.0 | 102 | 97 | 89 | 1144 | 1155 | 214 | 861 | 840 |
| 12.5 | 104 | 99 | 91 | 1145 | 1156 | 216 | 864 | 840 |
| 13.0 | 106 | 101 | 92 | 1147 | 1158 | 219 | 866 | 842 |
| 13.5 | 107 | 102 | 93 | 1146 | 1156 | 221 | 866 | 843 |
| 14.0 | 109 | 104 | 94 | 1149 | 1157 | 222 | 866 | 844 |
| 14.5 | 110 | 105 | 95 | 1150 | 1159 | 224 | 868 | 845 |
| 15.0 | 110 | 106 | 96 | 1146 | 1160 | 225 | 870 | 846 |

In table 1, the "exterior surface" refers to the surface of the material that is distal the high temperature event, i.e. the cold face. The "interior surface" refers to the surface of the material that is proximal or adjacent the high temperature event, i.e. the hot face.

A plurality of locations were used for taking measurement. Specifically, measurements were taken at a "right hand" location, a "centre" location, and a "left hand" location.

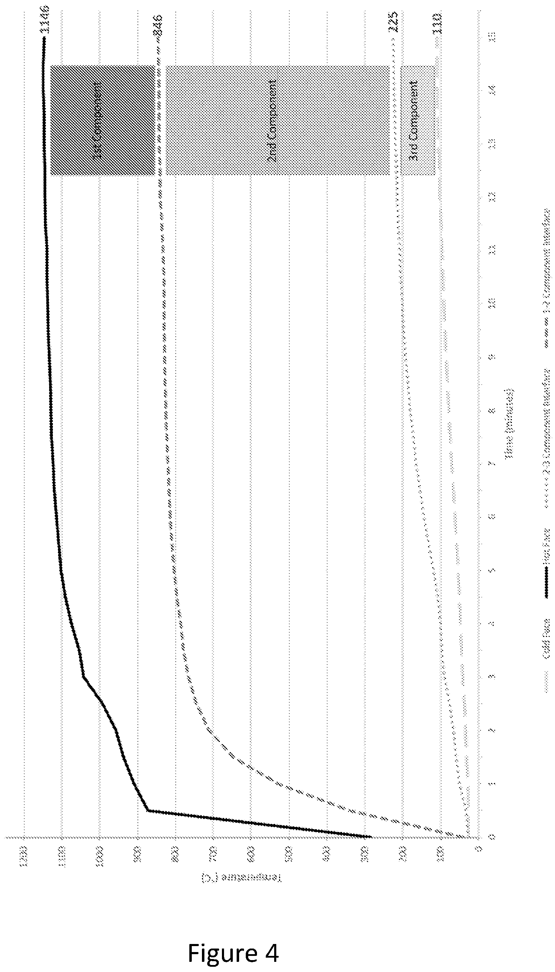

Figure 4 illustrates a graph of the results in Table 1. Figure 4 uses the data relating to the measurements taken at the "right-hand" measurement location. As can be seen from Figure 4 and Table 1, the surface of the first component, proximal the high temperature event, reaches a temperature of 1146°C after 15 minutes, whereas the surface of the third component, distal the high temperature event, only reaches a temperature of 110°C after 15 minutes. Accordingly, the material effectively insulates against high temperature events, protecting other components from the effects of such high temperatures.

The interface between the first and second components reaches a temperature of 846°C after 15 minutes, and the interface between the second and third components reaches a temperature of 225°C after 15 minutes.

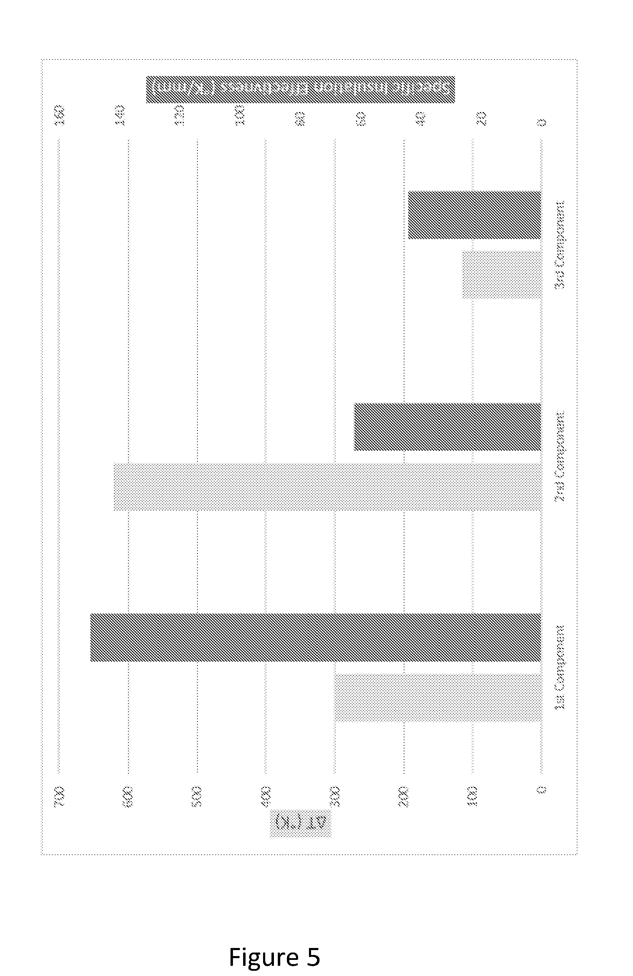

Accordingly, as illustrated in Figure 5, at 15 minutes, the first component reduces the temperature from a surface proximal the high temperature event (i.e. the hot surface) to the interface with the second component by 300°C. The second component reduces the temperature from the interface with the first component to the interface with the second component by 621°C. The third component reduces the temperature from the interface with the second component to the surface distal the high temperature event (i.e. the cold surface) by 115°C.

Figure 5 also illustrates the specific insulation effectiveness of each component relative to its thickness. As can be seen, the first component has the highest specific insulation effectiveness at approximately 150°K/mm thickness. The second component has the second highest specific insulation effectiveness at approximately 62°K/mm thickness. The third component has the lowest specific insulation effectiveness at approximately 44°K/mm thickness. This demonstrates in particular, the effectiveness of the first component in reducing the temperature between the hot surface and the cold surface of the material.

In this example, the first component has a thickness of 2mm, the second component has a thickness of 10mm and the third component has a thickness of 2.6mm.

In some embodiments, the thickness of the second component may be reduced, e.g. to 5mm. In this way, the thickness of the second component can be tailored depending on the expected heat exposure, thereby reducing the overall weight of the enclosure.

The material underwent impact testing and was found to show no significant decrease in impact resistance and material resistance. The impact testing was carried out using a 2.33g projectile with an aspect diameter of 5.5mm moving at an average velocity of 275mm/s.

Although this disclosure has been made with reference to one or more embodiments, it will be appreciated that various changes or modifications can be made without departing from the scope of the disclosure, as described in the appended claims. For example, although an enclosure has been described, it will be appreciated that the material disclosed herein could be used to make any structure or component.

## Claims

1. A battery enclosure (2) defining an internal volume for housing an electrochemical power unit, wherein the battery enclosure comprises a body (4) and a lid (6) arranged to define an internal surface configured to completely surround the internal volume, wherein the body and the lid are each made from a wall material (16);
wherein the wall material has a first component (22) and a second component (24), wherein the first component is made from a ceramic matrix composite, CMC (18), with a ceramic coating (20) provided over a first surface of the CMC, wherein the second component comprises a microporous insulating material, and wherein the second component is provided on a second surface of the CMC such that the second component supports the CMC; and
wherein the body and the lid are arranged such that the ceramic coating forms the entire internal surface of the battery enclosure.

2. A battery enclosure according to claim 1, wherein the ceramic coating is applied to the CMC via thermal spraying (e.g. thermal plasma spraying).

3. A battery component according to claim 1 or claim 2, wherein the microporous insulation is made from at least one of: silica, aluminium sodium silicate, fumed silicon dioxide, S2 glass fibres, trimethylsilyl (TMS) aerogel, and titanium dioxide.

4. A battery enclosure according to any preceding claim, wherein the first component of the wall material is configured to withstand temperatures up to approximately 2200°C.

5. A battery enclosure according to any preceding claim, wherein the second component is configured to withstand temperatures up to approximately 1500°C.

6. A battery enclosure according to any preceding claim, wherein the wall material has a third component provided distal the first wall component with respect to the ceramic coating, wherein the third component is formed from a composite material.

7. A battery enclosure according to claim 6, wherein the third component is provided distal the second component, with respect to the ceramic coating.

8. A battery enclosure according to any of claims 6 or 7, wherein the second component is provided between the first wall component and the third component so as to act as a structural bridge between the first and third components.

9. A battery enclosure according to any of claims 6 to 8, wherein the third component is configured to withstand temperatures up to approximately 500°C.

10. A battery enclosure according to any of claims 6 to 9, wherein the third component comprises a non-porous material.

11. A battery enclosure according to any preceding claim, wherein the wall material is formed from a plurality of components, two or more of which are integrally formed, e.g. bonded together.

12. A battery enclosure according to claim 11, wherein a scrim is provided between two or more of the components.

13. A battery enclosure according to claim 12, wherein the scrim comprises a heatproof material such as glass and/or quartz.

14. A battery enclosure according to claim 12 or claim 13, wherein the scrim and the second component are integrally formed.

15. A battery enclosure according to any preceding claim, wherein the wall material is configured to insulate between an innermost portion of a respective component, with respect to the ceramic coating, and an outermost portion of the respective component, with respect to the ceramic coating; and/or
wherein the wall material is configured to insulate between an innermost portion of **the** wall material, with respect to the ceramic coating, and an outermost portion of the wall material, with respect to the ceramic coating; and/or
wherein the ceramic coating comprises a blend of ceramics; and/or
wherein the ceramic coating comprises one or more of: aluminium oxide, titanium oxide and aluminium silicate, titanium dioxide, mullite and ytterbium disilicate; and/or
wherein the CMC comprises carbon fibres embedded in a ceramic matrix, e.g. the ceramic matrix comprises one or more of silicon oxide, silicon carbide, aluminium oxide, iron oxide, calcium oxide, magnesium oxide, sodium oxide, potassium oxide, fumed silica, titanium oxide, and potassium disilicate, and/or wherein the enclosure is configured for use on an aircraft, e.g. an eVTOL (electric vertical take-off and landing) aircraft.

## Patentansprüche

1. Batteriegehäuse (2), das ein Innenvolumen zum Unterbringen einer elektrochemischen Leistungseinheit definiert, wobei das Batteriegehäuse einen Körper (4) und einen Deckel (6) umfasst, die so angeordnet sind, dass sie eine Innenoberfläche definieren, die so ausgebildet ist, dass sie das Innenvolumen vollständig umschließt, wobei der Körper und der Deckel jeweils aus einem Wandmaterial (16) hergestellt sind;
wobei das Wandmaterial eine erste Komponente (22) und eine zweite Komponente (24) aufweist, wobei die erste Komponente aus einem Keramikmatrix-Verbundwerkstoff, CMC (18), hergestellt ist, mit einer Keramikbeschichtung (20), die über der ersten Oberfläche des CMC bereitgestellt ist, wobei die zweite Komponente ein mikroporöses Isoliermaterial umfasst, und wobei die zweite Komponente auf einer zweiten Oberfläche des CMC derart bereitgestellt ist, dass die zweite Komponente den CMC trägt; und
wobei der Körper und der Deckel derart angeordnet sind, dass die Keramikbeschichtung die gesamte Innenoberfläche des Batteriegehäuses bildet.

2. Batteriegehäuse nach Anspruch 1, wobei die Keramikbeschichtung auf den CMC mittels thermischen Spritzens (z. B. thermisches Plasmaspritzen) aufgetragen wird.

3. Batteriekomponente nach Anspruch 1 oder Anspruch 2, wobei die mikroporöse Isolierung aus mindestens einem hergestellt ist von: Kieselerde, Natriumaluminiumsilikat, pyrogenem Siliciumdioxid, S2-Glasfasern, Trimethylsilyl-(TMS)-Aerogel und Titandioxid.

4. Batteriegehäuse nach einem vorstehenden Anspruch, wobei die erste Komponente des Wandmaterials so ausgebildet ist, dass sie Temperaturen von bis zu etwa 2200°C widersteht.

5. Batteriegehäuse nach einem vorstehenden Anspruch, wobei die zweite Komponente so ausgebildet ist, dass sie Temperaturen von bis zu etwa 1500°C widersteht.

6. Batteriegehäuse nach einem vorstehenden Anspruch, wobei das Wandmaterial eine dritte Komponente aufweist, die distal zur ersten Wandkomponente in Bezug auf die Keramikbeschichtung bereitgestellt ist, wobei die dritte Komponente aus einem Verbundwerkstoff gebildet ist.

7. Batteriegehäuse nach Anspruch 6, wobei die dritte Komponente distal zur zweiten Komponente in Bezug auf die Keramikbeschichtung bereitgestellt ist.

8. Batteriegehäuse nach einem der Ansprüche 6 oder 7, wobei die zweite Komponente zwischen der ersten Wandkomponente und der dritten Komponente bereitgestellt ist, um als strukturelle Brücke zwischen der ersten und der dritten Komponente zu fungieren.

9. Batteriegehäuse nach einem der Ansprüche 6 bis 8, wobei die dritte Komponente so ausgebildet ist, dass sie Temperaturen von bis zu etwa 500°C widersteht.

10. Batteriegehäuse nach einem der Ansprüche 6 bis 9, wobei die dritte Komponente ein nicht poröses Material umfasst.

11. Batteriegehäuse nach einem vorstehenden Anspruch, wobei das Wandmaterial aus einer Vielzahl von Komponenten gebildet ist, von denen zwei oder mehr integral geformt sind, z. B. miteinander gebondet sind.

12. Batteriegehäuse nach Anspruch 11, wobei zwischen zwei oder mehr der Komponenten ein Gittergewebe bereitgestellt ist.

13. Batteriegehäuse nach Anspruch 12, wobei das Gittergewebe ein hitzebeständiges Material wie Glas und/oder Quarz umfasst.

14. Batteriegehäuse nach Anspruch 12 oder Anspruch 13, wobei das Gittergewebe und die zweite Komponente einstückig gebildet sind.

15. Batteriegehäuse nach einem vorstehenden Anspruch, wobei das Wandmaterial so ausgebildet ist, dass es zwischen einem innersten Abschnitt einer jeweiligen Komponente in Bezug auf die Keramikbeschichtung und einem äußersten Abschnitt der jeweiligen Komponente in Bezug auf die Keramikbeschichtung isoliert; und/oder
wobei das Wandmaterial so ausgebildet ist, dass es zwischen einem innersten Abschnitt des Wandmaterials in Bezug auf die Keramikbeschichtung und einem äußersten Abschnitt des Wandmaterials in Bezug auf die Keramikbeschichtung isoliert; und/oder
wobei die Keramikbeschichtung eine Keramikmischung umfasst; und/oder
wobei die Keramikbeschichtung eines oder mehrere der folgenden umfasst: Aluminiumoxid, Titanoxid und Aluminiumsilicat, Titandioxid, Mullit und Ytterbiumdisilikat; und/oder
wobei der CMC in eine Keramikmatrix eingebettete Kohlenstofffasern umfasst, z. B. die Keramikmatrix eines oder mehrerer umfasst von Siliziumoxid, Siliciumcarbid, Aluminiumoxid, Eisenoxid, Kalziumoxid, Magnesiumoxid, Natriumoxid, Kaliumoxid, pyrogener Kieselerde, Titanoxid und Kaliumdisilikat, und/oder wobei das Gehäuse zur Verwendung in einem Luftfahrzeug ausgebildet ist, z. B. einem eVTOL-(elektrischen vertikal startenden und landenden)-Luftfahrzeug.

## Revendications

1. Enceinte (2) pour batterie définissant un volume interne destiné à loger une unité d'alimentation électrochimique, dans laquelle l'enceinte pour batterie comprend un corps (4) et un couvercle (6) conçus pour définir une surface interne configurée pour entourer complètement le volume interne, dans laquelle le corps et le couvercle sont chacun fabriqués à partir d'un matériau (16) de paroi ;
dans laquelle le matériau de paroi présente un premier composant (22) et un deuxième composant (24), dans laquelle le premier composant est fabriqué à partir d'un composite à matrice céramique, CMC (18), avec un revêtement céramique (20) disposé par-dessus une première surface du CMC, dans laquelle le deuxième composant comprend un matériau isolant microporeux, et dans laquelle le deuxième composant est disposé sur une deuxième surface du CMC de telle sorte que le deuxième composant supporte le CMC ; et dans laquelle le corps et le couvercle sont agencés de telle sorte que le revêtement céramique forme la surface interne totale de l'enceinte pour batterie.

2. Enceinte pour batterie selon la revendication 1, dans laquelle le revêtement céramique est appliqué au CMC via pulvérisation thermique (par exemple pulvérisation de plasma thermique).

3. Composant de batterie selon la revendication 1 ou la revendication 2, dans lequel l'isolation microporeuse est fabriquée à partir d'au moins un des éléments suivants : silice, silicate d'aluminium et de sodium, dioxyde de silicium sublimé, fibres de verre S2, aérogel de triméthylsilyle (TMS) et dioxyde de titane.

4. Enceinte pour batterie selon une quelconque revendication précédente, dans laquelle le premier composant du matériau de paroi est configuré pour résister à des températures montant jusqu'à approximativement 2 200 °C.

5. Enceinte pour batterie selon une quelconque revendication précédente, dans laquelle le deuxième composant est configuré pour résister à des températures montant jusqu'à approximativement 1 500 °C.

6. Enceinte pour batterie selon une quelconque revendication précédente, dans laquelle le matériau de paroi présente un troisième composant disposé distalement au premier composant de paroi par rapport au revêtement céramique, dans laquelle le troisième composant est formé à partir d'un matériau composite.

7. Enceinte pour batterie selon la revendication 6, dans laquelle le troisième composant est disposé distalement au deuxième composant, par rapport au revêtement céramique.

8. Enceinte pour batterie selon l'une quelconque des revendications 6 ou 7, dans laquelle le deuxième composant est disposé entre le premier composant de paroi et le troisième composant de paroi de manière à servir de pont structural entre les premier et troisième composants.

9. Enceinte pour batterie selon l'une quelconque des revendications 6 à 8, dans laquelle le troisième composant est configuré pour résister à des températures montant jusqu'à approximativement 500 °C.

10. Enceinte pour batterie selon l'une quelconque des revendications 6 à 9, dans laquelle le troisième composant comprend un matériau non poreux.

11. Enceinte pour batterie selon une quelconque revendication précédente, dans laquelle le matériau de paroi est formé à partir d'une pluralité de composants, dont deux ou plus sont formés d'un seul tenant, par exemple liés entre eux.

12. Enceinte pour batterie selon la revendication 11, dans laquelle une grille tissée est disposée entre deux ou plus des composants.

13. Enceinte pour batterie selon la revendication 12, dans laquelle la grille tissée comprend un matériau résistant à la chaleur comme le verre et/ou le quartz.

14. Enceinte pour batterie selon la revendication 12 ou la revendication 13, dans laquelle la grille tissée et le deuxième composant sont formés d'un seul tenant.

15. Enceinte pour batterie selon une quelconque revendication précédente, dans laquelle le matériau de paroi est configuré pour créer une isolation entre la partie la plus intérieure d'un composant respectif, par rapport au revêtement céramique, et une partie la plus extérieure du composant respectif, par rapport au revêtement céramique ; et/ou
dans laquelle le matériau de paroi est configuré pour créer une isolation entre la partie la plus intérieure du matériau de paroi, par rapport au revêtement céramique, et une partie la plus extérieure du matériau de paroi, par rapport au revêtement céramique ; et/ou
dans laquelle le revêtement céramique comprend un mélange de céramiques ; et/ou
dans laquelle le revêtement céramique comprend un ou plusieurs éléments parmi : oxyde d'aluminium, oxyde de titane et silicate d'aluminium, dioxyde de titane, mullite et disilicate d'ytterbium ; et/ou
dans laquelle le CMC comprend des fibres de carbone incorporées dans une matrice céramique, par exemple la matrice céramique comprend un ou plusieurs éléments parmi oxyde de silicium, carbure de silicium, oxyde d'aluminium, oxyde de fer, oxyde de calcium, oxyde de magnésium, oxyde de sodium, oxyde de potassium, silice sublimée, oxyde de titane et disilicate de potassium, et/ou dans laquelle l'enceinte est configurée pour une utilisation sur un aéronef, par exemple un aéronef eVTOL (électrique à décollage et atterrissage à la verticale).
